# EUROPEAN PATENT SPECIFICATION

(11) **EP 2 933 727 B1**
(45) Date of publication and mention of the grant of the patent: **28.02.2018**
(21) Application number: 13870374.9
(22) Date of filing: 03.07.2013
(51) Int. Cl.: G06F 13/38, G06F 13/40

(54) **DATA TERMINAL, DATA TRANSMISSION SYSTEM AND HOT PLUG CONTROL METHOD**
DATENENDGERÄT, DATENÜBERTRAGUNGSSYSTEM UND HOT-PLUG-STEUERUNGSVERFAHREN
TERMINAL DE DONNÉES, SYSTÈME DE TRANSMISSION DE DONNÉES ET PROCÉDÉ DE COMMANDE DE CONNEXION À CHAUD

(30) Priority: 07.01.2013 CN 201310005183
(43) Date of publication of application: 21.10.2015
(73) Proprietor: Huawei Device Co., Ltd., Shenzhen, Guangdong 518129 (CN)
(72) Inventor: GONG, Shuqiang, Shenzhen Guangdong 518129 (CN); ZHAO, Menglong, Shenzhen Guangdong 518129 (CN)
(74) Representative: Pfenning, Meinig & Partner mbB
(86) International application number: PCT/CN2013/078716
(87) International publication number: WO 2014/106371

(56) References cited:
- CN-A- 1 645 344
- CN-A- 1 838 098
- CN-A- 101 826 063
- US-A1- 2007 223 742
- US-A1- 2008 225 830
- US-B1- 7 996 631

## Description

### TECHNICAL FIELD

The present invention relates to the field of communications technologies, and in particular, to a data terminal, a data transmission system, and a hot swapping control method.

### BACKGROUND

Currently, most data terminals for implementing a data service work as a lower computer, and use a universal serial bus (USB) interface or a Peripheral Component Interconnect Express (PCIE) interface to communicate with a host computer. An important feature of a data terminal is supporting a hot swapping (Hot swapping) function, namely "live swapping", indicating that the data terminal can be inserted or removed during operation of a computer, which does not cause circuit burnout of the computer or the data terminal and enables the computer to detect and use the data terminal in a timely manner.

With the development of technologies, some data terminals implement a voice function, and a voice data exchange is implemented between the data terminals and a computer by using a USB interface or a PCIE interface. The USB interface is used as an example, and a process of the voice data exchange includes that: after a data terminal is connected to a USB interface of the computer in a matching manner by using the USB interface, the computer sends a command to the data terminal by using the USB interface, and establishes a voice communication connection between the computer and the data terminal; after using a voice device to collect a voice signal, the computer processes the voice signal to obtain processed voice data, and sends the voice data to the data terminal by using the USB interface, implementing voice data transmission between the computer and the data terminal.

When the voice data transmission is performed between the data terminal and the computer by using the USB interface or a PCIE interface, because the USB interface and the PCIE interface basically transmit data in a bulk manner, and voice data cannot be transmitted preferably when the data is transmitted in the bulk manner, voice data and service data except for voice data are transmitted in a first-in first-out manner, so that the voice data is congested by a large amount of service data, and it is difficult to effectively implement real-time voice data transmission.

To ensure the real-time voice data transmission of the data terminal, a digital audio interface may be used in the data terminal to transmit the voice data. However, the digital audio interface does not have a hot swapping function and is inapplicable to a hot swapping occasion, causing that the data terminal fails to have the hot swapping function when the digital audio interface is applied to the data terminal. Therefore, usage of the digital audio interface in the data terminal is limited.
US 2007/0223742 A1 discusses an audio control system with a hot plug-and-play mechanism and a method thereof. The audio control system includes an audio controller, a first audio encoder/decoder and a second audio encoder/decoder. The audio controller has a first reset signal and a second reset signal. The first audio encoder/decoder is coupled to the audio controller and receives the first reset signal. The second audio encoder/decoder is coupled to the audio controller and receives the second reset signal. The hot plug-and-play mechanism can be achieved when the audio controller selectively enables the first reset signal or the second reset signal.

### SUMMARY

A data terminal is provided, and is configured to implement voice data exchange with a computer by using a first digital audio circuit and a first digital audio connecting apparatus after the data terminal is connected to the computer.

A first aspect of the present invention provides a data terminal, including:
a first processor, a first digital audio circuit, an interface isolator, a first universal serial bus USB circuit, and a first connecting apparatus, where the first connecting apparatus includes a first digital audio connecting apparatus and a first USB connecting apparatus, and the first USB circuit has a hot swapping feature;
the first processor is connected to the first digital audio circuit, the first processor is further connected to the first USB circuit, the first digital audio circuit is connected to the interface isolator, the interface isolator is connected to the first digital audio connecting apparatus, and the first USB circuit is connected to the first USB connecting apparatus;
after the data terminal is connected to a computer by using the first connecting apparatus, an initial status of the interface isolator is a disconnected state and the first USB circuit enters an initialization process; the first processor is configured to: after initialization of the first USB circuit is complete, negotiate with the computer by using the first USB circuit and the first USB connecting apparatus, determine a first configuration parameter of the first digital audio circuit, and configure the first digital audio circuit according to the first configuration parameter; and
after configuration on the first digital audio circuit is complete, the interface isolator receives a connection command, and switches from the disconnected state to a connected state according to the connection command, so that a channel between the first digital audio circuit and the first digital audio connecting apparatus is connected, and voice data transmission is performed between the first processor and the computer by using the first digital audio circuit and the first digital audio connecting apparatus.

With reference to the first aspect, in a first possible implementation manner, that the interface isolator receives a connection command is specifically that: the interface isolator receives the connection command from the first digital audio circuit; or the interface isolator receives the connection command from the first processor.

With reference to the first aspect, or the first possible implementation manner of the first aspect, in a second possible implementation manner, the data terminal further includes a power management circuit, and the power management circuit is connected to the first processor, the first digital audio circuit, the first USB circuit, and the interface isolator; the power management circuit is configured to provide electric energy for the first processor, the first digital audio circuit, the first USB circuit, and the interface isolator; and the power management circuit is further connected to the first USB connecting apparatus of the first connecting apparatus, so that the power management circuit acquires electric energy from the computer after the first connecting apparatus is connected to the computer.

With reference to the first aspect, the first possible implementation manner of the first aspect, or the second possible implementation manner of the first aspect, in a third possible implementation manner, the data terminal further includes a radio frequency circuit that is configured to send a radio frequency signal to a wireless network or receive a radio frequency signal from a wireless network, the radio frequency circuit is connected to the first processor, and the radio frequency circuit is further connected to the power management circuit.

With reference to the first aspect, the first possible implementation manner of the first aspect, the second possible implementation manner of the first aspect, the third possible implementation manner of the first aspect, in a fourth possible implementation manner, the first processor is further configured to: after the interface isolator switches from the disconnected state to the connected state, receive, by using the first digital audio connecting apparatus and the first digital audio circuit, voice data transmitted by the computer, process the voice data to obtain a baseband signal, and send the baseband signal to the radio frequency circuit, and the radio frequency circuit is configured to modulate the baseband signal into a radio frequency signal, and send the radio frequency signal to the wireless network; the first processor is further configured to: receive, by using the first USB connecting apparatus and the first USB circuit, service data sent by the computer, process the service data to obtain a baseband signal, and send the baseband signal to the radio frequency circuit, and the radio frequency circuit is further configured to modulate the baseband signal into a radio frequency signal, and send the radio frequency signal to the wireless network;
the radio frequency circuit is further configured to: receive a radio frequency signal sent by the wireless network, modulate the radio frequency signal into a baseband signal, and send the baseband signal to the first processor; and the first processor is further configured to: process the baseband signal to obtain voice data or service data, send the voice data to the computer by using the first digital audio circuit and the first digital audio connecting apparatus, or send the service data to the computer by using the first USB circuit and the first USB connecting apparatus; and
the first processor is further configured to receive, by using the first USB connecting apparatus and the first USB circuit, a system control command sent by the computer, or is configured to send a system control command to the computer by using the first USB connecting apparatus and the first USB circuit.

A second aspect of the present invention provides a data transmission system, including: a data terminal and a computer, where
the data terminal includes a first processor, a first digital audio circuit, an interface isolator, a first universal serial bus USB circuit, and a first connecting apparatus, where the first connecting apparatus includes a first digital audio connecting apparatus and a first USB connecting apparatus, and the first USB circuit has a hot swapping feature;
the first processor is connected to the first digital audio circuit, the first processor is further connected to the first USB circuit, the first digital audio circuit is connected to the interface isolator, the interface isolator is connected to the first digital audio connecting apparatus, and the first USB circuit is connected to the first USB connecting apparatus;
the computer includes a second processor, a second digital audio circuit, a second USB circuit, a second connecting apparatus, where the second connecting apparatus includes a second digital audio connecting apparatus and a second USB connecting apparatus, and the second USB circuit has a hot swapping feature;
the second processor is connected to the second digital audio circuit, the second processor is further connected to the second USB circuit, the second digital audio circuit is connected to the second digital audio connecting apparatus, and the second USB circuit is connected to the second USB connecting apparatus;
the first connecting apparatus is configured to connect to the second connecting apparatus, so that the data terminal is connected to the computer, where the first digital audio connecting apparatus is configured to connect to the second digital audio connecting apparatus, and the first USB connecting apparatus is configured to connect to the second USB connecting apparatus;
after the data terminal is connected to the second connecting apparatus of the computer by using the first connecting apparatus, an initial status of the interface isolator is a disconnected state, and the first USB circuit and the second USB circuit enter an initialization process; after initialization of the first USB circuit and the second USB circuit is complete, the first processor negotiates with the second processor by using the first USB circuit, the first USB connecting apparatus, the second USB connecting apparatus, and the second USB circuit, and determines a first configuration parameter of the first digital audio circuit and a second configuration parameter of the second digital audio circuit; the first processor configures the first digital audio circuit according to the first configuration parameter, and the second processor configures the second digital audio circuit according to the second configuration parameter; and
after configuration on the first digital audio circuit and the second digital audio circuit is complete, the interface isolator receives a connection command, and switches from the disconnected state to a connected state according to the connection command, so that a channel among the first digital audio circuit, the first digital audio connecting apparatus, the second digital audio connecting apparatus, and the second digital audio circuit is connected, and voice data transmission is performed between the first processor and the second processor by using the first digital audio circuit, the first digital audio connecting apparatus, the second digital audio connecting apparatus, and the second digital audio circuit.

In a first possible implementation manner of the second aspect, the first connecting apparatus is connected to the second connecting apparatus in a swappable manner; and the interface isolator switches from the connected state to the disconnected state after a connection between the first connecting apparatus and the second connecting apparatus is disconnected.

With reference to the second aspect, or the first possible implementation manner of the second aspect, in a second possible implementation manner of the second aspect, that the interface isolator receives a connection command is specifically that: the interface isolator receives the connection command from the first digital audio circuit; or the interface isolator receives the connection command from the first processor.

With reference to the second aspect, the first possible implementation manner of the second aspect, or the second possible implementation manner of the second aspect, in a third possible implementation manner of the second aspect, the data terminal further includes a power management circuit, and the computer further includes a power circuit;
the power management circuit is connected to the first processor, the first digital audio circuit, the interface isolator, and the first USB circuit; and
the power management circuit is further connected to the first USB connecting apparatus, and the power circuit is connected to the second USB connecting apparatus, so that after the first USB connecting apparatus and the second connecting apparatus are connected, the power management circuit is configured to acquire electric energy from the power circuit and provide electric energy for the first processor, the first digital audio circuit, the interface isolator, and the first USB circuit.

With reference to the second aspect, the first possible implementation manner of the second aspect, the second possible implementation manner of the second aspect, or the third possible implementation manner of the second aspect, in a fourth possible implementation manner, the data terminal further includes a radio frequency circuit that is configured to send a radio frequency signal to a wireless network or receive a radio frequency signal from a wireless network, the radio frequency circuit is connected to the first processor, and the radio frequency circuit is connected to the power management circuit.

With reference to the second aspect, the first possible implementation manner of the second aspect, the second possible implementation manner of the second aspect, the third possible implementation manner of the second aspect, or the fourth possible implementation manner of the second aspect, in a fifth possible implementation manner, the first processor is further configured to: after the interface isolator switches from the disconnected state to the connected state, receive voice data that is transmitted by the second processor by using the second digital audio circuit, the second digital audio connecting apparatus, the first digital audio connecting apparatus, and the first digital audio circuit, process the voice data to obtain a baseband signal, and send the baseband signal to the radio frequency circuit, and the radio frequency circuit is configured to modulate the baseband signal into a radio frequency signal, and send the radio frequency signal to the wireless network; and the first processor is further configured to: receive service data that is sent by the second processor by using the second USB connecting apparatus, the second USB circuit, the first USB connecting apparatus, and the first USB circuit, process the service data to obtain a baseband signal, and send the baseband signal to the radio frequency circuit, and the radio frequency circuit is further configured to modulate the baseband signal into a radio frequency signal, and send the radio frequency signal to the wireless network;
the radio frequency circuit is further configured to: receive a radio frequency signal sent by the wireless network, modulate the radio frequency signal into a baseband signal, and send the baseband signal to the first processor; and the first processor is further configured to: process the baseband signal to obtain voice data or service data, send the voice data to the second processor by using the first digital audio circuit, the first digital audio connecting apparatus, the second digital audio connecting apparatus, and the second digital audio circuit, or send the service data to the second processor by using the first USB circuit, the first USB connecting apparatus, the second USB connecting apparatus, and the second USB circuit; and
the first processor is further configured to receive a system control command that is sent by the second processor by using the second USB connecting apparatus, the second USB circuit, the first USB connecting apparatus, and the first USB circuit, or is configured to send a system control command to the second processor by using the first USB circuit, the first USB connecting apparatus, the second USB connecting apparatus, and the second USB circuit.

A third aspect of the present invention provides a hot swapping control method, where the hot swapping control method is applied to a data terminal, and the data terminal includes a first interface, where the first interface includes a first digital audio interface and a first USB interface, and the first USB interface has a hot swapping feature; and
the hot swapping control method includes:
after the data terminal is connected to a computer by using the first interface, initializing the first USB interface, where an initial status of a channel between the first digital audio interface and the computer is a disconnected state;
after initialization of the first USB interface is complete, negotiating, by the data terminal, with the computer by using the first USB interface, and determining a first configuration parameter of the first digital audio interface;
configuring, by the data terminal, the first digital audio interface according to the first configuration parameter; and
connecting the channel between the first digital audio interface and the computer, so that voice data transmission is performed between the data terminal and the computer by using the first digital audio interface.

In a first possible implementation manner of the third aspect, after the connecting the channel between the first digital audio interface and the computer, the method further includes:
receiving, by the data terminal by using the first digital audio interface, voice data transmitted by the computer, or receiving, by using the first USB interface, service data transmitted by the computer; and
processing, by the data terminal, the voice data or the service data to obtain a radio frequency signal, and sending the radio frequency signal to a wireless network.

With reference to the third aspect or the first possible implementation manner of the third aspect, in a second possible implementation manner, after the connecting the channel between the first digital audio interface and the computer, the method further includes:
receiving, by the data terminal, a radio frequency signal sent by the wireless network;
processing, by the data terminal, the radio frequency signal to obtain voice data or service data; and
transmitting, by the data terminal, the voice data to the computer by using the first digital audio interface, or transmitting the service data to the computer by using the first USB interface.

With reference to the third aspect, the first possible implementation manner of the third aspect, or the second possible implementation manner of the third aspect, in a third possible implementation manner of the third aspect, the hot swapping control method further includes:
receiving or sending, by the data terminal, a system control command by using the first USB interface.

It can be seen from the foregoing technical solutions that, the embodiments of the present invention have the following advantages:

By using a hot swapping feature of a first USB circuit, negotiation on a configuration parameter of a first digital audio circuit is complete, and after parameter configuration on the first digital audio circuit is complete, a channel between the first digital audio circuit and a first digital audio connecting apparatus is connected, so that voice data transmission may be performed between a first processor and a computer by using the first digital audio circuit and the first digital audio connecting apparatus, and the first digital audio circuit has the hot swapping feature when the first digital audio circuit is applied to a data terminal.

### BRIEF DESCRIPTION OF DRAWINGS

FIG. 1 is a schematic diagram of a structure of a data terminal according to an embodiment of the present invention;
FIG. 2 is another schematic diagram of a structure of a data terminal according to an embodiment of the present invention;
FIG. 3 is a schematic diagram of a structure of a data transmission system according to an embodiment of the present invention;
FIG. 4 is another schematic diagram of a structure of a data transmission system according to an embodiment of the present invention;
FIG. 5 is a schematic diagram of a first connecting apparatus according to an embodiment of the present invention; and
FIG. 6 is a schematic diagram of a hot swapping control method according to an embodiment of the present invention.

### DESCRIPTION OF EMBODIMENTS

Embodiments of the present invention provide a data terminal, a data transmission system, and a hot swapping control method, which implements a hot swapping feature of a first digital audio circuit in the data terminal, so that the first digital audio circuit can be used in the data terminal to implement voice data transmission.

First, it should be noted that, a data terminal mentioned in the embodiments of the present invention may be a wireless WAN card, a wireless modem, or the like that has a voice function; a computer mentioned in the embodiments of the present invention may be a terminal device that can implement a computer function, such as a PC, a tablet, or a smartphone.

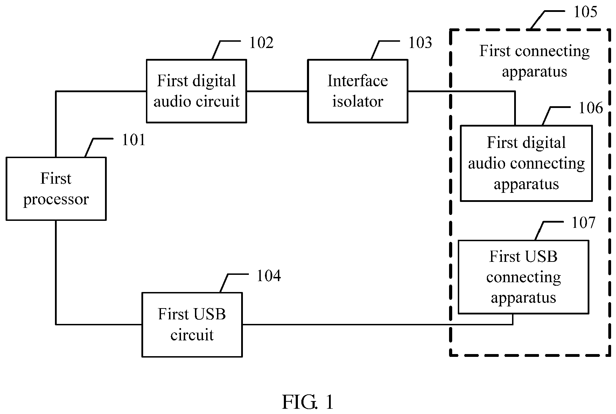

Referring to FIG. 1, FIG. 1 is a schematic diagram of a structure of a data terminal according to an embodiment of the present invention, where the data terminal includes:
a first processor 101, a first digital audio circuit 102, an interface isolator 103, a first USB circuit 104, and a first connecting apparatus 105, where the first connecting apparatus 105 includes a first digital audio connecting apparatus 106 and a first USB connecting apparatus 107, and the first USB circuit 104 has a hot swapping feature.

The first processor 101 is connected to the first digital audio circuit 102, the first processor 101 is further connected to the first USB circuit 104, the first digital audio circuit 102 is connected to the interface isolator 103, the first digital audio connecting apparatus 106 is connected to the interface isolator 103, and the first USB connecting apparatus 107 is connected to the first USB circuit 104.

After the data terminal is connected to a computer by using the first connecting apparatus 105, an initial status of the interface isolator 103 is a disconnected state and the first USB circuit 104 enters an initialization process; the first processor 101 is configured to: after initialization of the first USB circuit 104 is complete, negotiate with the computer by using the first USB circuit 104 and the first USB connecting apparatus 107, determine a first configuration parameter of the first digital audio circuit 102, and configure the first digital audio circuit 102 according to the first configuration parameter.

After configuration on the first digital audio circuit 102 is complete, the interface isolator 103 receives a connection command, and switches from the disconnected state to a connected state according to the connection command, so that a channel between the first digital audio circuit 102 and the first digital audio connecting apparatus 106 is connected, and voice data transmission may be performed between the first processor 101 and the computer by using the first digital audio circuit 102 and the first digital audio connecting apparatus 106.

Optionally, in this embodiment of the present invention, the first digital audio connecting apparatus 106 and the first USB connecting apparatus 107 are integrated in the first connecting apparatus 105.

Optionally, in this embodiment of the present invention, that the interface isolator 103 receives a connection command is specifically that: the interface isolator 103 receives the connection command from the first digital audio circuit 102; or the interface isolator 103 receives the connection command from the first processor 101.

In this embodiment of the present invention, after the first connecting apparatus 105 is connected to the computer, the initial status of the interface isolator 103 is the disconnected state, the first digital audio circuit 102 is electrically disconnected from the computer, and the first USB circuit 104 is to start an exchange process, implementing initialization of the first USB circuit 104; after the first USB circuit 104 completes the initialization, the first processor 101 of the data terminal negotiates with the computer by using the first USB circuit 104 and the first USB connecting apparatus 107, and determines a first configuration parameter of the first digital audio circuit 102, where the configuration parameter includes a communication frequency, a frame format, a working mode, and the like, and the first processor 101 configures the first digital audio circuit 102 according to the first configuration parameter. It should be noted that, when the first processor 101 negotiates with the computer by using the first USB circuit 104 and the first USB connecting apparatus 107, and determines the first configuration parameter of the first digital audio circuit 102, the computer also determines a second configuration parameter of a second digital audio circuit of the computer and configures the second digital audio circuit of the computer according to the second configuration parameter; after the first processor 101 completes parameter configuration on the first digital audio circuit 102 and the computer completes parameter configuration on the second digital audio circuit on the computer, the interface isolator 103 receives the connection command, and the interface isolator 103 switches from the disconnected state to the connected state according to the connection command, so that the channel between the first digital audio circuit 102 and the first digital audio connecting apparatus 106 is connected, and the first digital audio circuit 102 has a hot swapping feature.

In this embodiment of the present invention, after the first connecting apparatus 105 is connected to the computer, service data or a system control command sent by the computer is transmitted to the first processor 101 by using the first USB connecting apparatus 107 and the first USB circuit 104, so that the first processor 101 may obtain the service data or the system control command sent by the computer; or the first processor 101 may send service data or a system control command to the computer by using the first USB circuit 104 and the first USB connecting apparatus 107, so that the computer may receive the service data or the system control command sent by the data terminal.

In this embodiment of the present invention, after the interface isolator 103 switches from the disconnected state to the connected state, voice data transmission may be further implemented between the computer and the data terminal. Specifically, voice data sent by the computer is transmitted to the first processor 101 by using the first digital audio connecting apparatus 106 and the first digital audio circuit 102, so that the first processor 101 may obtain the voice data sent by the computer; or the first processor 101 of the data terminal may send voice data to the computer by using the first digital audio circuit 102 and the first digital audio connecting apparatus 106, so that the computer may receive the voice data sent by the data terminal.

It should be noted that, in this embodiment of the present invention, the service data does not include the voice data.

In this embodiment of the present invention, the first digital audio circuit 102 may be a pulse code modulation (PCM) circuit or may be an integrate interface of sound (IIS) circuit. The voice data is transmitted by using the first digital audio circuit 102 in the data terminal, which can effectively ensure real-time voice data transmission.

In this embodiment of the present invention, the first connecting apparatus 105 is a physical module that is divided in terms of a physical entity structure and is configured to connect to the computer, for example, the first connecting apparatus 105 may be a connecting groove, a connector, or a general socket, where a circuit pin may be included.

In this embodiment of the present invention, when the first connecting apparatus 105 is connected to an interface in the computer in a matching manner, and the interface isolator 103 is in the connected state, an exchange on the voice data, the service data, and the system control command may be performed between the data terminal and the computer; if a connection between the data terminal and the computer is disconnected or the computer is powered off, the interface isolator 103 switches from the connected state to the disconnected state.

In this embodiment of the present invention, the disconnected state of the interface isolator 103 refers to that a pin of the interface isolator 103 is in a high-impedance state; or when a pin on a side on which the interface isolator 103 is connected to the computer is in an input state, and the pin does not affect a change of a level of a connected signal cable, a state in which the interface isolator 103 is is also the disconnected state. The connected state of the interface isolator 103 refers to another state, except for the disconnected state, in which data transmission can be performed normally.

It should be noted that, in this embodiment of the present invention, there may be a plurality of implementation manners of disconnecting and connecting a channel between the first digital audio circuit 102 and the first digital audio connecting apparatus 106, using the interface isolator 103 is only one feasible implementation manner of the plurality of implementation manners, and another hardware manner such as a switch may be used for implementation, or a software manner may also be used for implementation, provided that connection and disconnection of the channel between the first digital audio circuit 102 and the first digital audio connecting apparatus 106 can be implemented. Therefore, in an actual application, an implementation manner of the connection and the disconnection of the channel may be set according to a specific situation.

In this embodiment of the present invention, a data terminal includes a first digital audio circuit 102 configured to transmit voice data and an interface isolator 103 configured to implement hot swapping control over the first digital audio circuit 102, so that after a first connecting apparatus 105 of the data terminal is connected to an interface of a computer in a matching manner, a first processor 101 of the data terminal may negotiate with the computer by using a first USB circuit 104 and a first USB connecting apparatus and determine a first configuration parameter of the first digital audio circuit 102, and the first processor 101 completes configuration on the first digital audio circuit 102 according to the first configuration parameter; after the configuration on the first digital audio circuit 102 is complete, the interface isolator 103 receives a connection command, and the interface isolator 103 switches from a disconnected state to a connected state according to the connection command, so that a channel between the first digital audio circuit 102 and a first digital audio connecting apparatus 106 is connected, implementing the hot swapping control over the first digital audio circuit 102. Therefore, the first digital audio circuit 102 may be used in the data terminal to implement voice data transmission.

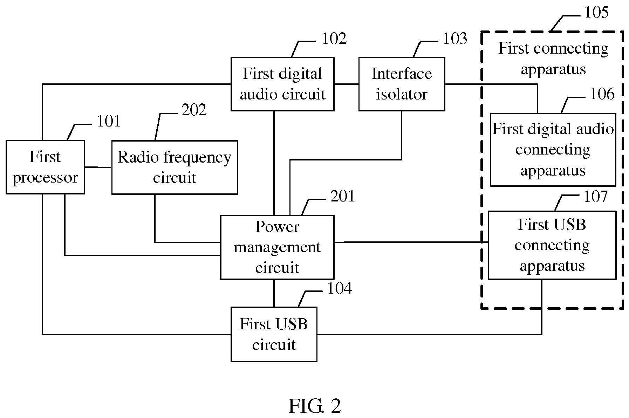

Referring to FIG. 2, FIG. 2 is a schematic diagram of a structure of a data terminal according to an embodiment of the present invention, where the data terminal includes: the first processor 101, the first digital audio circuit 102, the interface isolator 103, the first USB circuit 104, and the first connecting apparatus 105 that are described in the embodiment shown in FIG. 1. Content of the first processor 101, the first digital audio circuit 102, the interface isolator 103, the first USB circuit 104, and the first connecting apparatus 105is similar to the content described in the embodiment shown in FIG. 1, and details are not described herein again.

In this embodiment of the present invention, the data terminal further includes a power management circuit 201, where the power management circuit 201 is connected to the first processor 101, the first digital audio circuit 102, the interface isolator 103, and the first USB circuit 104. The power management circuit 201 is configured to provide electric energy for the first processor 101, the first digital audio circuit 102, the interface isolator 103, and the first USB circuit 104. In addition, the power management circuit 201 is further connected to the first USB connecting apparatus 107 of the first connecting apparatus 105, so that after the first connecting apparatus 105 is connected to the computer, the power management circuit 201 may acquire electric energy from the computer and provide electric energy for the data terminal.

In this embodiment of the present invention, the power management circuit 201 may be a power management integrated circuit (Power Management Integrated Circuit, PMIC for short).

In this embodiment of the present invention, the data terminal may further include a radio frequency circuit 202 that is configured to send a radio frequency signal to a wireless network or receive a radio frequency signal from a wireless network, the radio frequency circuit 202 is connected to the first processor 101, and the radio frequency circuit 202 is further connected to the power management circuit 201. The first processor 101 may send the radio frequency signal to an external device by using the radio frequency circuit 202, or the radio frequency circuit 202 may modulate the received radio frequency signal into a baseband signal and transmit the baseband signal to the first processor 101.

In this embodiment of the present invention, the first processor 101 is further configured to: after the interface isolator 103 switches from the disconnected state to the connected state, receive, by using the first digital audio connecting apparatus 106, the interface isolator 103, and the first digital audio circuit 102, voice data transmitted by the computer, process the voice data to obtain a baseband signal, and send the baseband signal to the radio frequency circuit 202; and the radio frequency circuit 202 is further configured to modulate the baseband signal into a radio frequency signal, and send the radio frequency signal to the wireless network.

In this embodiment of the present invention, the first processor 101 is further configured to: receive, by using the first USB connecting apparatus 107 and the first USB circuit 104, service data sent by the computer, process the service data to obtain a baseband signal, and send the baseband signal to the radio frequency circuit 202; the radio frequency circuit 202 is further configured to modulate the baseband signal into a radio frequency signal, and send the radio frequency signal to the wireless network.

In this embodiment of the present invention, the radio frequency circuit 202 is further configured to: receive a radio frequency signal sent by the wireless network, modulate the radio frequency signal into a baseband signal, and send the baseband signal to the first processor; and the first processor 101 is further configured to: process the baseband signal to obtain voice data or service data, send the voice data to the computer by using the first digital audio circuit 102 and the first digital audio connecting apparatus 106, or send the service data to the computer by using the first USB circuit 104 and the first USB connecting apparatus 107.

In this embodiment of the present invention, the first processor 101 is further configured to receive, by using the first USB connecting apparatus 107 and the first USB circuit 104, a system control command sent by the computer, or is configured to send a system control command to the computer by using the first USB connecting apparatus 107 and the first USB circuit 104.

In this embodiment of the present invention, a first digital audio circuit 102 configured to transmit voice data and an interface isolator 103 configured to implement hot swapping control over the first digital audio circuit 102 are disposed in a data terminal, so that after a first connecting apparatus 105 of the data terminal is connected to a computer, a first processor 101 of the data terminal may negotiate with the computer by using a first USB circuit 104 and a first USB connecting apparatus 107 and determine a first configuration parameter of the first digital audio circuit 102, and the first processor 101 completes configuration on the first digital audio circuit 101 according to the first configuration parameter; after the configuration on the first digital audio circuit 102 is complete, the interface isolator 103 receives a connection command, and the interface isolator 103 switches from a disconnected state to a connected state according to the connection command, so that a channel between the first digital audio circuit 102 and a first digital audio connecting apparatus 106 is connected, the first digital audio circuit 102 has a hot swapping feature, and the first digital audio circuit 102 can be used in the data terminal to transmit voice data.

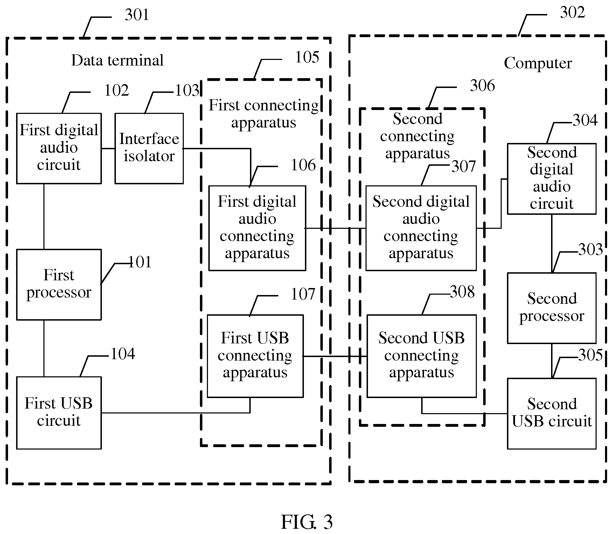

Referring to FIG. 3, FIG. 3 is a schematic diagram of a structure of a data transmission system according to an embodiment of the present invention, where the data transmission system includes: a data terminal 301 and a computer 302.

The data terminal 301 includes a first processor 101, a first digital audio circuit 102, an interface isolator 103, a first USB circuit 104, and a first connecting apparatus 105, where the first connecting apparatus 105 includes a first digital audio connecting apparatus 106 and a first USB connecting apparatus 107, and the first USB circuit 104 has a hot swapping feature.

The first processor 101 is connected to the first digital audio circuit 102, the first processor 101 is further connected to the first USB circuit 104, the first digital audio circuit 102 is connected to the interface isolator 103, the first digital audio connecting apparatus 106 is connected to the interface isolator 103, and the first USB connecting apparatus 107 is connected to the first USB circuit 104.

The computer 302 includes a second processor 303, a second digital audio circuit 304, a second USB circuit 305, and a second connecting apparatus 306, where the second connecting apparatus 306 includes a second digital audio connecting apparatus 307 and a second USB connecting apparatus 308, and the second USB circuit 305 has a hot swapping feature.

The second processor 303 is connected to the second digital audio circuit 304, the second processor 303 is further connected to the second USB circuit 305, the second digital audio connecting apparatus 307 is connected to the second digital audio circuit 304, and the second USB connecting apparatus 308 is connected to the second USB circuit 305.

The first connecting apparatus 105 is configured to connect to the second connecting apparatus 306, so that the data terminal 301 is connected to the computer 302, the first digital audio connecting apparatus 106 is configured to connect to the second digital audio connecting apparatus 307, and the first USB connecting apparatus 107 is configured to connect to the second USB connecting apparatus 308.

In this embodiment of the present invention, after the data terminal 301 is connected to the second connecting apparatus 306 of the computer 32 by using the first connecting apparatus 105, an initial status of the interface isolator 103 is a disconnected state and the first USB circuit 104 and the second USB circuit 305 enter an initialization process; the first processor 101 is configured to: after initialization of the first USB circuit 104 and the second USB circuit 305 is complete, negotiate with the second processor 303 by using the first USB circuit 104, the first USB connecting apparatus 107, the second USB connecting apparatus 308, and the second USB circuit 305, and determine a first configuration parameter of the first digital audio circuit 102 and a second configuration parameter of the second digital audio circuit 304, where the first configuration parameter and the second configuration parameter include a communication frequency, a frame format, a working mode, and the like; the first processor 101 configures the first digital audio circuit 102 according to the first configuration parameter, and the second processor 303 configures the second digital audio circuit 304 according to the second configuration parameter; and after configuration on the first digital audio circuit 102 and the second digital audio circuit 304 is complete, the interface isolator 103 receives a connection command, and switches from the disconnected state to a connected state according to the connection command, so that a channel among the first digital audio circuit 102, the first digital audio connecting apparatus 106, the second digital audio connecting apparatus 307, and the second digital audio circuit 304 is connected, and voice data transmission may be performed between the first processor 101 and the second processor 303 by using the first digital audio circuit 102, the first digital audio connecting apparatus 106, the second digital audio connecting apparatus 307, and the second digital audio circuit 304.

Optionally, in this embodiment of the present invention, the first connecting apparatus 105 is connected to the second connecting apparatus 306 in a swappable manner; and the interface isolator 103 switches from the connected state to the disconnected state after a connection between the first connecting apparatus 105 and the second connecting apparatus 306 is disconnected.

Optionally, in this embodiment of the present invention, the first digital audio connecting apparatus 106 and the first USB connecting apparatus 107 are integrated in the first connecting apparatus 105, and the second digital audio connecting apparatus 307 and the second USB connecting apparatus 308 are integrated in the second connecting apparatus 306.

Optionally, in this embodiment of the present invention, that the interface isolator 103 receives a connection command is specifically that: the interface isolator 103 receives the connection command from the first digital audio circuit 102; or the interface isolator 103 receives the connection command from the first processor 101.

Optionally, in this embodiment of the present invention, the first digital audio circuit 102 may be a PCM circuit or an IIS circuit, and the second digital audio circuit 304 may be a PCM circuit or an IIS circuit.

In this embodiment of the present invention, after the first connecting apparatus 105 of the data terminal 301 is connected to the second connecting apparatus 306 of the computer 302, service data or a system control command sent by the second processor 303 of the computer 302 is transmitted to the first processor 101 by using the second USB circuit 305, the second connecting apparatus 306, the first USB connecting apparatus 107, and the first USB circuit 104, so that the first processor 101 may obtain the service data or the system control command sent by the second processor 303 of the computer 302; or the first processor 101 may send service data or a system control command to the second processor 303 by using the first USB circuit 104, the first USB connecting apparatus 107, the second USB connecting apparatus 308, and the second USB circuit 305, so that the second processor 303 of the computer 302 may receive the service data or the system control command sent by the first processor 101 of the data terminal 301.

In this embodiment of the present invention, after the interface isolator 103 switches from the disconnected state to the connected state, voice data transmission may be further implemented between the computer 302 and the data terminal 301. Specifically, voice data sent by the second processor 303 of the computer 302 is transmitted to the first processor 101 by using the second digital audio connecting apparatus 307, the second digital audio circuit 304, the first digital audio connecting apparatus 106, and the first digital audio circuit 102, so that the first processor 101 may obtain the voice data sent by the second processor 303 of the computer 302, or the first processor 101 of the data terminal 301 may send voice data to the second processor 303 of the computer 302 by using the first digital audio circuit 102, the first digital audio connecting apparatus 106, the second digital audio connecting apparatus 307, and the second digital audio circuit 304, so that the second processor 303 of the computer 302 may receive the voice data sent by the first processor 101 of the data terminal 301.

In this embodiment of the present invention, when the interface isolator 103 is in the connected state, if a connection between the data terminal 301 and the computer 302 is disconnected or the computer 302 is powered off, the interface isolator 103 switches from the connected state to the disconnected state.

In this embodiment of the present invention, the disconnected state of the interface isolator 103 refers to that a pin of the interface isolator 103 is in a high-impedance state; or when a pin on a side on which the interface isolator 103 is connected to the computer 32 is in an input state, and the pin does not affect a change of a level of a connected signal cable, a state in which the interface isolator 103 is also the disconnected state. The connected state of the interface isolator 103 refers to another state, except for the disconnected state, in which data transmission can be performed normally.

It should be noted that, in this embodiment of the present invention, there may be a plurality of implementation manners of disconnecting and connecting a channel between the first digital audio circuit 102 and the first digital audio connecting apparatus 106, using the interface isolator 103 is only one feasible implementation manner of the plurality of implementation manners, and another hardware manner such as a switch may be used for implementation, or a software manner may also be used for implementation, provided that connection and disconnection of the channel between the first digital audio circuit 102 and the first digital audio connecting apparatus 106 can be implemented. Therefore, in an actual application, an implementation manner of the connection and the disconnection of the channel may be set according to a specific situation.

In the data transmission system in this embodiment of the present invention, a data terminal 301 includes a first digital audio circuit 102 configured to transmit voice data and an interface isolator 103 configured to implement hot swapping control over the first digital audio circuit 102; after a first connecting apparatus 105 of the data terminal 301 is connected to a second connecting apparatus 306 of a computer 302, an initial status of the interface isolator 103 is a disconnected state and a first USB circuit 104 and a second USB circuit 305 enter an initialization process; after initialization is complete, a first processor 101 of the data terminal 301 may negotiate with a second processor 303 of the computer 302 by using the first USB circuit 104, a first USB connecting apparatus 107, a second USB connecting apparatus 308, and the second USB circuit 305, and determine a first configuration parameter of the first digital audio circuit 102 and a second configuration parameter of a second digital audio circuit 304; the first processor 101 configures the first digital audio circuit 102 according to the first configuration parameter, and the second processor 303 configures the second digital audio circuit 304 according to the second configuration parameter; after the configuration on the first digital audio circuit 102 and the second digital audio circuit 304 is complete, the interface isolator 103 receives a connection command, and the interface isolator 103 switches from the disconnected state to a connected state according to the connection command, so that a channel among the first digital audio circuit 102, a first digital audio connecting apparatus 106, a second digital audio connecting apparatus 307, and the second digital audio circuit 304 is connected, implementing the hot swapping control over the first digital audio circuit 102. Therefore, the first digital audio circuit 102 may be used in the data terminal 301 to implement voice data transmission.

The first connecting apparatus 105, the second connecting apparatus 306, the first digital audio connecting apparatus 106, the first USB connecting apparatus 107, the second digital audio connecting apparatus 307, and the second USB connecting apparatus 308 , and the like that are mentioned in this embodiment of the present invention may be a connecting groove, a connector, a socket, or the like, where a circuit pin may be included.

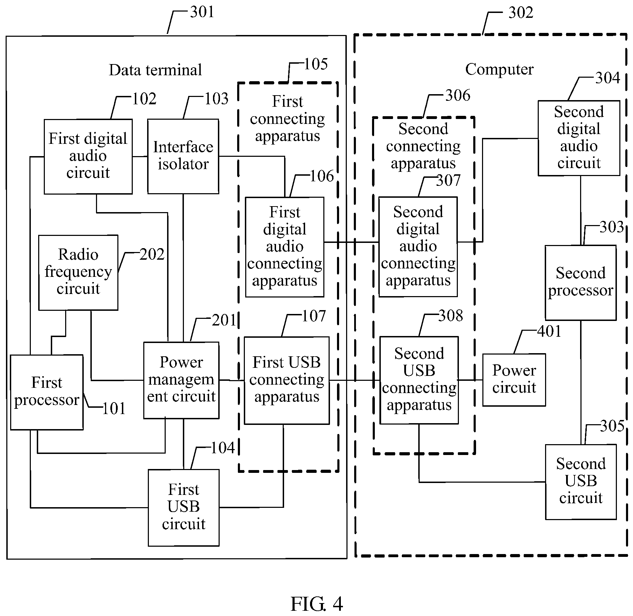

Referring to FIG. 4, FIG. 4 is a schematic diagram of a data transmission system according to an embodiment of the present invention, where the data transmission system includes: the data terminal 301 and the computer 302 that are described in the embodiment shown in FIG. 3. Content of the data terminal 301 and the computer 302 is similar to the content described in the embodiment shown in FIG. 3, and details are not described herein again.

In this embodiment of the present invention, the data terminal 301 may further include a power management circuit 201, and the computer 302 may further include a power circuit 401; the power management circuit 201 is connected to the first processor 101, the first digital audio circuit 102, the interface isolator 103, and the first USB circuit 104; and the power circuit 401 is connected to the second USB connecting apparatus 308.

The power management circuit 201 is further connected to the first connecting apparatus 105, so that after the first connecting apparatus 105 is connected to the second connecting apparatus 306, the power management circuit 201 is configured to acquire electric energy from the power circuit 401, and provide electric energy for the first processor 101, the first digital audio circuit 102, the interface isolator 103, and the first USB circuit 104.

In this embodiment of the present invention, the data terminal 301 may further include a radio frequency circuit 202 that is configured to send a radio frequency signal to a wireless network or receive a radio frequency signal from a wireless network, the radio frequency circuit 202 is connected to the first processor 101 and the power management circuit 201, and the power management circuit 201 provides electric energy for the radio frequency circuit 202.

In this embodiment of the present invention, the first processor 101 is further configured to: after the interface isolator 103 switches from a disconnected state to a connected state, receive voice data that is transmitted by the second processor 303 by using the second digital audio circuit 304, the second digital audio connecting apparatus 307, the first digital audio connecting apparatus 106, and the first digital audio circuit 102, process the voice data to obtain a baseband signal, and send the baseband signal to the radio frequency circuit 202; and the radio frequency circuit 202 is configured to modulate the baseband signal into a radio frequency signal, and send the radio frequency signal to the wireless network.

In this embodiment of the present invention, the first processor 101 is further configured to: receive service data that is sent by the second processor 303 by using the second USB connecting apparatus 308, the second USB circuit 305, the first USB connecting apparatus 107, and the first USB circuit 104, process the service data to obtain a baseband signal, and send the baseband signal to the radio frequency circuit 202; and the radio frequency circuit 202 is configured to modulate the baseband signal into a radio frequency signal and send the radio frequency signal to the wireless network.

In this embodiment of the present invention, the radio frequency circuit 202 is further configured to: receive a radio frequency signal sent by the wireless network, modulate the radio frequency signal into a baseband signal, and send the baseband signal to the first processor 101; and the first processor 101 is further configured to: process the baseband signal to obtain voice data or service data, send the voice data to the second processor 303 by using the first digital audio circuit 102, the first digital audio connecting apparatus 106, the second digital audio connecting apparatus 307, and the second digital audio circuit 304, or send the service data to the second processor 303 by using the first USB circuit 104, the first USB connecting apparatus 107, the second USB connecting apparatus 308, and the second USB circuit 305.

In this embodiment of the present invention, the first processor 101 is further configured to receive a system control command that is sent by the second processor 303 by using the second USB connecting apparatus 308, the second USB circuit 305, the first USB connecting apparatus 107, and the first USB circuit 104.

In this embodiment of the present invention, the first processor 101 is further configured to send a system control command to the second processor 303 by using the first USB circuit 104, the first USB connecting apparatus 107, the second USB connecting apparatus 308, and the second USB circuit 305.

In this embodiment of the present invention, voice data transmission may be performed between the second processor 303 of the computer 302 and the first processor 101 of the data terminal 301. Voice data sent by the second processor 303 of the computer 302 to the first processor 101 may be data obtained by means of collection by a voice device, such as a microphone, of the computer 302. After collecting the data, the second processor 303 performs processing, such as echo elimination, environmental noise elimination, recording, or voice reorganization on the data, and transmits voice data obtained after the processing to the first processor 101 by using the second digital audio circuit 304, the second digital audio connecting apparatus 307, the first digital audio connecting apparatus 106, and the first digital audio circuit 102. After receiving the voice data, the first processor 101 performs processing such as encryption, encoding, framing, encapsulation, and conversion, on the voice data to obtain a baseband signal, and sends the baseband signal to the radio frequency circuit 202 ; the radio frequency circuit 202 modulates the baseband signal into a radio frequency signal , and sends the radio frequency signal to a wireless network. If the radio frequency circuit 202 receives a radio frequency signal that includes voice data, the radio frequency circuit 202 modulates the radio frequency signal into a baseband signal, and sends the baseband signal to the first processor 101; the first processor 101 processes the baseband signal to obtain the voice data, and the first processor 101 transmits the voice data to the second processor 303 by using the first digital audio circuit 102, the first digital audio connecting apparatus 106, the second digital audio connecting apparatus 307, and the second digital audio circuit 304. The second processor 303 may process the voice data, and broadcast, by using a voice device of the computer 302, voice data after the processing, so that a user can hear voice.

In the data transmission system in this embodiment of the present invention, a data terminal 301 includes a first digital audio circuit 102 configured to transmit voice data and an interface isolator 103 configured to implement hot swapping control over the first digital audio circuit 102, so that after a first connecting apparatus 105 of the data terminal 301 is connected to a second connecting apparatus 306 of a computer 302, an initial status of the interface isolator 103 is a disconnected state and a first USB circuit 104 and a second USB circuit 305 enter an initialization process; after initialization is complete, a first processor 101 of the data terminal 301 may negotiate with a second processor 303 of the computer 302 by using the first USB circuit 104, a first USB connecting apparatus 107, a second USB connecting apparatus 308, and the second USB circuit 305, and determine a configuration parameter of the first digital audio circuit 102 and a configuration parameter of a second digital audio circuit 304; the first processor 101 and he second processor 303 respectively complete parameter configuration on the first digital audio circuit 102 and the second digital audio circuit 304 according to the corresponding configuration parameters; after the configuration is complete, the interface isolator 103 receives a connection command, and the interface isolator 103 switches from the disconnected state to a connected state according to the connection command, so that a channel among the first digital audio circuit 102, a first digital audio connecting apparatus 106, a second digital audio connecting apparatus 307, and the second digital audio circuit 304 is connected, implementing the hot swapping control over the first digital audio circuit 102. Therefore, the first digital audio circuit 102 may be used in the data terminal 301 to implement voice data transmission.

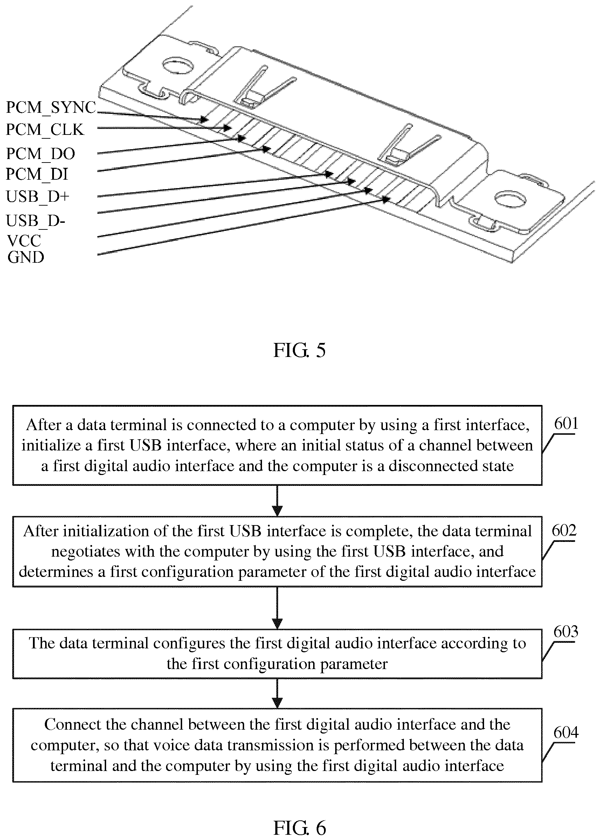

For a better understanding of the first connecting apparatus in this embodiment of the present invention, in an example in which the first digital audio circuit 102 is PCM circuit , a structural diagram of an entity of the first connecting apparatus is described, and reference is made to FIG. 5. Pins of the first connecting apparatus includes: PCM_SYNC, PCM_CLK, PCM_DO, PCM_DI, USB_D+, USB_D-, VCC, and GND, where the pins PCM_SYNC, PCM_CLK, PCM_DO, and PCM_DI are pins connected to the first digital audio circuit 102, the pins USB_D+ and USB_D- are pins connected to the first USB circuit 104, and the pins VCC and GND are pins connected to the power management circuit 201.

Referring to FIG. 6, FIG. 6 is a schematic diagram of a hot swapping control method of a data terminal according to an embodiment of the present invention. In this embodiment of the present invention, the data terminal includes a first interface, where the first interface includes a first digital audio interface and a first USB interface, and the first USB interface has a hot swapping feature. The hot swapping control method of the data terminal includes:

601. After the data terminal is connected to a computer by using the first interface, initialize the first USB interface, where an initial status of a channel between the first digital audio interface and the computer is a disconnected state.

In this embodiment of the present invention, after the data terminal is connected to the computer by using the first interface, the first USB interface is initialized, where the initial status of the channel between the first digital audio interface and the computer is the disconnected state.

In this embodiment of the present invention, the data terminal may be the data terminal described in any of the embodiments shown in FIG. 1 to FIG. 4; the first digital audio interface includes the first digital audio connecting apparatus 106, the interface isolator 103, and the first digital audio circuit 102; the first USB interface includes the first USB circuit 104 and the first USB connecting apparatus 107.

In this embodiment of the present invention, after the data terminal is connected to the computer by using the first interface, because an initial status of the interface isolator 103 is a disconnected state, the initial status of the channel between the first digital audio interface and the computer is the disconnected state.

602. After initialization of the first USB interface is complete, the data terminal negotiates with the computer by using the first USB interface, and determines a first configuration parameter of the first digital audio interface.

In this embodiment of the present invention, after the initialization of the first USB interface is complete, the data terminal negotiates with the computer by using the first USB interface, and determines the first configuration parameter of the first digital audio interface.

603. The data terminal configures the first digital audio interface according to the first configuration parameter.

In this embodiment of the present invention, the data terminal configures the first digital audio interface according to the first configuration parameter.

604. Connect the channel between the first digital audio interface and the computer, so that voice data transmission is performed between the data terminal and the computer by using the first digital audio interface.

In this embodiment of the present invention, after the data terminal completes configuration on the first digital audio interface, the channel between the first digital audio interface and the computer is connected, so that the voice data transmission is performed between the data terminal and the computer by using the first digital audio interface.

In this embodiment of the present invention, after the data terminal connects the channel between the first digital audio interface and the computer, the data terminal may receive, by using the first digital audio interface, voice data transmitted by the computer, or receive, by using the first USB interface, service data transmitted by the computer; in addition, the data terminal further processes the voice data or the service data to obtain a radio frequency signal, and sends the radio frequency signal to a wireless network.

In this embodiment of the present invention, after the data terminal connects the channel between the first digital audio interface and the computer, the data terminal may further receive a radio frequency signal sent by a wireless network, and process the radio frequency signal to obtain voice data or service data; and if what is obtained by means of processing is voice data, the data terminal transmits the voice data to the computer by using the first digital audio interface, or if what is obtained by means of processing is service data, the data terminal transmits the service data to the computer by using the first USB interface.

In this embodiment of the present invention, after the data terminal is connected to the computer by using the first interface, the data terminal may further receive, by using the first USB interface, a system control command sent by the computer, or send a system control command to the computer by using the first USB interface. For example, the system control command may be a configuration parameter negotiation command.

In this embodiment of the present invention, after a data terminal is connected to a computer by using a first interface, a first USB interface of the first interface is initialized, and an initial status of a channel between a first digital audio interface of the first interface and the computer is a disconnected state; after the initialization of the first USB interface is complete, the data terminal negotiates with the computer by using the first USB interface, determines a first configuration parameter of the first digital audio interface, and configures the first digital audio interface according to the first configuration parameter; after the configuration is complete, the channel between the first digital audio interface and the computer is connected, implementing hot swapping control over the first digital audio interface. Therefore, the first digital audio interface may be used in the data terminal to implement voice data transmission.

A person of ordinary skill in the art may understand that all or a part of the steps of the methods in the foregoing embodiment may be implemented by a program instructing relevant hardware. The program may be stored in a computer readable storage medium. By running the program in the readable storage medium, the hot swapping control method in the foregoing embodiment is implemented. The foregoing mentioned storage medium may be a read-only memory, a magnetic disk, or an optical disc.

The foregoing provides detailed descriptions of the data terminal, the data transmission system, and the hot swapping control method provided by the present invention. A person of ordinary skill in the art may, based on the idea of the present invention, make modifications with respect to the specific implementation manners and the application scope. Therefore, the content of this specification shall not be construed as a limitation to the present invention.

## Claims

1. A data terminal, comprising:
a first processor (101), a first digital audio circuit (102), an interface isolator (103), a first universal serial bus USB circuit (104), and a first connecting apparatus (105), wherein the first connecting apparatus (105) comprises a first digital audio connecting apparatus (106) and a first USB connecting apparatus (107), and the first USB circuit (104) has a hot swapping feature;
the first processor (101) is connected to the first digital audio circuit (102), the first processor (101) is further connected to the first USB circuit (104), the first digital audio circuit (102) is connected to the interface isolator (103), the interface isolator (103) is connected to the first digital audio connecting apparatus (106), and the first USB circuit (104) is connected to the first USB connecting apparatus (107);
after the data terminal is connected to a computer by using the first connecting apparatus (105), an initial status of the interface isolator (103) is a disconnected state and the first USB circuit (104) enters an initialization process; the first processor (101) is configured to: after initialization of the first USB circuit (104) is complete, negotiate with the computer by using the first USB circuit (103) and the first USB connecting apparatus (107), determine a first configuration parameter of the first digital audio circuit (102), and configure the first digital audio circuit (102) according to the first configuration parameter; and
after configuration on the first digital audio circuit (102) is complete, the interface isolator (103) receives a connection command, and switches from the disconnected state to a connected state according to the connection command, so that a channel between the first digital audio circuit (102) and the first digital audio connecting apparatus (106) is connected, and voice data transmission is performed between the first processor (101) and the computer by using the first digital audio circuit (102) and the first digital audio connecting apparatus (106).

2. The data terminal according to claim 1, wherein that the interface isolator (103) receives a connection command is specifically that: the interface isolator (103) receives the connection command from the first digital audio circuit (102); or the interface isolator (103) receives the connection command from the first processor (101).

3. The data terminal according to claim 1 or 2, wherein the data terminal further comprises a power management circuit, and the power management circuit is connected to the first processor (101), the first digital audio circuit (102), the first USB circuit (104), and the interface isolator (103); the power management circuit is configured to provide electric energy for the first processor (101), the first digital audio circuit (102), the first USB circuit (104), and the interface isolator (103); and the power management circuit is further connected to the first USB connecting apparatus (107) of the first connecting apparatus (105), so that the power management circuit acquires electric energy from the computer after the first connecting apparatus (105) is connected to the computer.

4. The data terminal according to any one of claims 1 to 3, wherein the data terminal further comprises a radio frequency circuit that is configured to send a radio frequency signal to a wireless network or receive a radio frequency signal from a wireless network, the radio frequency circuit is connected to the first processor (101), and the radio frequency circuit is further connected to the power management circuit.

5. The data terminal according to any one of claims 1 to 4, wherein the first processor (101) is further configured to: after the interface isolator (103) switches from the disconnected state to the connected state, receive, by using the first digital audio connecting apparatus (106) and the first digital audio circuit (102), voice data transmitted by the computer, process the voice data to obtain a baseband signal, and send the baseband signal to the radio frequency circuit, and the radio frequency circuit is configured to modulate the baseband signal into a radio frequency signal, and send the radio frequency signal to the wireless network; the first processor (101) is further configured to: receive, by using the first USB connecting apparatus (107) and the first USB circuit (104), service data sent by the computer, process the service data to obtain a baseband signal, and send the baseband signal to the radio frequency circuit, and the radio frequency circuit is further configured to modulate the baseband signal into a radio frequency signal, and send the radio frequency signal to the wireless network;
the radio frequency circuit is further configured to: receive a radio frequency signal sent by the wireless network, modulate the radio frequency signal into a baseband signal, and send the baseband signal to the first processor (101); and the first processor (101) is further configured to: process the baseband signal to obtain voice data or service data, send the voice data to the computer by using the first digital audio circuit (102) and the first digital audio connecting apparatus (106), or send the service data to the computer by using the first USB circuit (104) and the first USB connecting apparatus (107); and
the first processor (101) is further configured to receive, by using the first USB connecting apparatus (107) and the first USB circuit (104), a system control command sent by the computer, or is configured to send a system control command to the computer by using the first USB connecting apparatus (107) and the first USB circuit (104).

6. A data transmission system, comprising: a data terminal (301) and a computer (302), wherein
the data terminal (301) comprises a first processor (101), a first digital audio circuit (102), an interface isolator (103), a first universal serial bus USB circuit (104), and a first connecting apparatus (105), wherein the first connecting apparatus (105) comprises a first digital audio connecting apparatus (106) and a first USB connecting apparatus (107), and the first USB circuit (104) has a hot swapping feature;
the first processor (101) is connected to the first digital audio circuit (102), the first processor (101) is further connected to the first USB circuit (104), the first digital audio circuit (102) is connected to the interface isolator (103), the interface isolator (103) is connected to the first digital audio connecting apparatus (106), and the first USB circuit (104) is connected to the first USB connecting apparatus (107);
the computer (302) comprises a second processor (303), a second digital audio circuit (304), a second USB circuit (305), a second connecting apparatus (306), wherein the second connecting apparatus (306) comprises a second digital audio connecting apparatus (307) and a second USB connecting apparatus (308), and the second USB circuit (305) has a hot swapping feature;
the second processor (303) is connected to the second digital audio circuit (304), the second processor (303) is further connected to the second USB circuit (305), the second digital audio circuit (304) is connected to the second digital audio connecting apparatus (307), and the second USB circuit (305) is connected to the second USB connecting apparatus (308);
the first connecting apparatus (105) is configured to connect to the second connecting apparatus (306), so that the data terminal (301) is connected to the computer (302), wherein the first digital audio connecting apparatus (106) is configured to connect to the second digital audio connecting apparatus (307), and the first USB connecting apparatus (107) is configured to connect to the second USB connecting apparatus (308);
after the data terminal (301) is connected to the second connecting apparatus (306) of the computer (302) by using the first connecting apparatus (105), an initial status of the interface isolator (103) is a disconnected state, and the first USB circuit (104) and the second USB circuit (305) enter an initialization process; after initialization of the first USB circuit (104) and the second USB circuit (305) is complete, the first processor (101) negotiates with the second processor (303) by using the first USB circuit (104), the first USB connecting apparatus (107), the second USB connecting apparatus (308), and the second USB circuit (305), and determines a first configuration parameter of the first digital audio circuit (102) and a second configuration parameter of the second digital audio circuit (304); the first processor (101) configures the first digital audio circuit (102) according to the first configuration parameter, and the second processor (303) configures the second digital audio circuit (304) according to the second configuration parameter; and
after configuration on the first digital audio circuit (102) and the second digital audio circuit (304) is complete, the interface isolator (103) receives a connection command, and switches from the disconnected state to a connected state according to the connection command, so that a channel among the first digital audio circuit (102), the first digital audio connecting apparatus (106), the second digital audio connecting apparatus (307), and the second digital audio circuit (304) is connected, and voice data transmission is performed between the first processor (101) and the second processor (303) by using the first digital audio circuit (102), the first digital audio connecting apparatus (106), the second digital audio connecting apparatus (307), and the second digital audio circuit (304).

7. The data transmission system according to claim 6, wherein the first connecting apparatus (105) is connected to the second connecting apparatus (306) in a swappable manner; and
the interface isolator (103) switches from the connected state to the disconnected state after a connection between the first connecting apparatus (105) and the second connecting apparatus (306) is disconnected.

8. The data transmission system according to claim 6 or 7, wherein that the interface isolator (103) receives a connection command is specifically that: the interface isolator (103) receives the connection command from the first digital audio circuit (102); or the interface isolator (103) receives the connection command from the first processor (101).

9. The data transmission system according to any one of claims 6 to 8, wherein the data terminal (301) further comprises a power management circuit, and the computer (302) further comprises a power circuit;
the power management circuit is connected to the first processor (101), the first digital audio circuit (102), the interface isolator (103), and the first USB circuit (104); and
the power management circuit is further connected to the first USB connecting apparatus (107), and the power circuit is connected to the second USB connecting apparatus (308), so that after the first USB connecting apparatus (107) and the second connecting apparatus (306) are connected, the power management circuit is configured to acquire electric energy from the power circuit and provide electric energy for the first processor (101), the first digital audio circuit (102), the interface isolator (103), and the first USB circuit (104).

10. The data transmission system according to any one of claims 6 to 9, wherein the data terminal (301) further comprises a radio frequency circuit that is configured to send a radio frequency signal to a wireless network or receive a radio frequency signal from a wireless network, the radio frequency circuit is connected to the first processor (101), and the radio frequency circuit is connected to the power management circuit.

11. The data transmission system according to any one of claims 6 to 10, wherein
the first processor (101) is further configured to: after the interface isolator (103) switches from the disconnected state to the connected state, receive voice data that is transmitted by the second processor (303) by using the second digital audio circuit (304), the second digital audio connecting apparatus (307), the first digital audio connecting apparatus (106), and the first digital audio circuit (102), process the voice data to obtain a baseband signal, and send the baseband signal to the radio frequency circuit, and the radio frequency circuit is configured to modulate the baseband signal into a radio frequency signal, and send the radio frequency signal to the wireless network; and the first processor (101) is further configured to: receive service data that is sent by the second processor (303) by using the second USB connecting apparatus (308), the second USB circuit (305), the first USB connecting apparatus (107), and the first USB circuit (104), process the service data to obtain a baseband signal, and send the baseband signal to the radio frequency circuit, and the radio frequency circuit is further configured to modulate the baseband signal into a radio frequency signal, and send the radio frequency signal to the wireless network;
the radio frequency circuit is further configured to: receive a radio frequency signal sent by the wireless network, modulate the radio frequency signal into a baseband signal, and send the baseband signal to the first processor (101); and the first processor (101) is further configured to: process the baseband signal to obtain voice data or service data, send the voice data to the second processor (303) by using the first digital audio circuit (102), the first digital audio connecting apparatus (106), the second digital audio connecting apparatus (307), and the second digital audio circuit (304), or send the service data to the second processor (303) by using the first USB circuit (104), the first USB connecting apparatus (107), the second USB connecting apparatus (308), and the second USB circuit (305); and
the first processor (101) is further configured to receive a system control command that is sent by the second processor (303) by using the second USB connecting apparatus (308), the second USB circuit (305), the first USB connecting apparatus (107), and the first USB circuit (104), or is configured to send a system control command to the second processor (303) by using the first USB circuit (104), the first USB connecting apparatus (107), the second USB connecting apparatus (308), and the second USB circuit (305).

12. A hot swapping control method, wherein the hot swapping control method is applied to a data terminal, and the data terminal comprises a first interface, wherein the first interface comprises a first digital audio interface and a first USB interface, and the first USB interface has a hot swapping feature; and
the hot swapping control method comprises:
after the data terminal is connected to a computer by using the first interface, initializing (601) the first USB interface, wherein an initial status of a channel between the first digital audio interface and the computer is a disconnected state;
after initialization of the first USB interface is complete, negotiating (602), by the data terminal, with the computer by using the first USB interface, and determining a first configuration parameter of the first digital audio interface;
configuring (603), by the data terminal, the first digital audio interface according to the first configuration parameter; and
connecting (604) the channel between the first digital audio interface and the computer, so that voice data transmission is performed between the data terminal and the computer by using the first digital audio interface.

13. The method according to claim 12, after the connecting the channel between the first digital audio interface and the computer, further comprising:
receiving, by the data terminal by using the first digital audio interface, voice data transmitted by the computer, or receiving, by using the first USB interface, service data transmitted by the computer; and
processing, by the data terminal, the voice data or the service data to obtain a radio frequency signal, and sending the radio frequency signal to a wireless network.

14. The method according to claim 12 or 13, after the connecting the channel between the first digital audio interface and the computer, further comprising:
receiving, by the data terminal, a radio frequency signal sent by the wireless network;
processing, by the data terminal, the radio frequency signal to obtain voice data or service data; and
transmitting, by the data terminal, the voice data to the computer by using the first digital audio interface, or transmitting the service data to the computer by using the first USB interface.

15. The method according to any one of claims 12 to 14, wherein the method further comprises:
receiving or sending, by the data terminal, a system control command by using the first USB interface.

## Patentansprüche

1. Datenendgerät, das Folgendes umfasst:
einen ersten Prozessor (101), eine erste Digitalaudioschaltung (102), einen Schnittstellenisolator (103), eine erste Universal Serial Bus- bzw. USB-Schaltung (104) und eine erste Verbindungsvorrichtung (105), wobei die erste Verbindungsvorrichtung (105) eine erste Digitalaudioverbindungsvorrichtung (106) und eine erste USB-Verbindungsvorrichtung (107) umfasst und die erste USB-Schaltung (104) ein "Hot-Swapping"-Merkmal aufweist;
der erste Prozessor (101) ist mit der ersten Digitalaudioschaltung (102) verbunden, der erste Prozessor (101) ist ferner mit der ersten USB-Schaltung (104) verbunden, wobei die erste Digitalaudioschaltung (102) mit dem Schnittstellenisolator (103) verbunden ist, der Schnittstellenisolator (103) mit der ersten Digitalaudioverbindungsvorrichtung (106) verbunden ist und die erste USB-Schaltung (104) mit der ersten USB-Verbindungsvorrichtung (107) verbunden ist;
nachdem das Datenendgerät unter Verwendung der ersten Verbindungsvorrichtung (105) mit einem Computer verbunden wurde, ist ein Anfangsstatus des Schnittstellenisolators (103) ein getrennter Status und die erste USB-Schaltung (104) tritt in einen Initialisierungsprozess ein; der erste Prozessor (101) ist ausgelegt zum: nachdem Initialisierung der ersten USB-Schaltung (104) abgeschlossen wurde, Verhandeln mit dem Computer unter Verwendung der ersten USB-Schaltung (103) und der ersten USB-Verbindungsvorrichtung (107), Bestimmen eines ersten Konfigurationsparameters der ersten Digitalaudioschaltung (102) und Konfigurieren der ersten Digitalaudioschaltung (102) gemäß dem ersten Konfigurationsparameter; und
nachdem die Konfiguration der ersten Digitalaudioschaltung (102) abgeschlossen wurde, empfängt der Schnittstellenisolator (103) einen Verbindungsbefehl und schaltet vom getrennten Status in einen verbundenen Status gemäß dem Verbindungsbefehl um, so dass ein Kanal zwischen der ersten Digitalaudioschaltung (102) und der ersten Digitalaudioverbindungsvorrichtung (106) verbunden ist, und Sprachdatenübertragung zwischen dem ersten Prozessor (101) und dem Computer unter Verwendung der ersten Digitalaudioschaltung (102) und der ersten Digitalaudioverbindungsvorrichtung (106) durchgeführt wird.

2. Datenendgerät nach Anspruch 1, wobei, dass der Schnittstellenisolator (103) einen Verbindungsbefehl empfängt, insbesondere Folgendes bedeutet: der Schnittstellenisolator (103) empfängt den Verbindungsbefehl von der ersten Digitalaudioschaltung (102); oder der Schnittstellenisolator (103) empfängt den Verbindungsbefehl vom ersten Prozessor (101).

3. Datenendgerät nach Anspruch 1 oder 2, wobei das Datenendgerät ferner eine Strommanagementschaltung umfasst und die Strommanagementschaltung mit dem ersten Prozessor (101), der ersten Digitalaudioschaltung (102), der ersten USB-Schaltung (104) und dem Schnittstellenisolator (103) verbunden ist; die Strommanagementschaltung ausgelegt ist zum Zuführen elektrischer Energie für den ersten Prozessor (101), die erste Digitalaudioschaltung (102), die erste USB-Schaltung (104) und den Schnittstellenisolator (103); und die Strommanagementschaltung ferner verbunden ist mit der ersten USB-Verbindungsvorrichtung (107) der ersten Verbindungsvorrichtung (105), so dass die Strommanagementschaltung elektrische Energie vom Computer abgreift, nachdem die erste Verbindungsvorrichtung (105) mit dem Computer verbunden wurde.

4. Datenendgerät nach einem der Ansprüche 1 bis 3, wobei das Datenendgerät ferner eine Hochfrequenzschaltung umfasst, die ausgelegt ist zum Senden eines Hochfrequenzsignals an ein drahtloses Netzwerk oder zum Empfangen eines Hochfrequenzsignals von einem drahtlosen Netzwerk, wobei die Hochfrequenzschaltung mit dem ersten Prozessor (101) verbunden ist und die Hochfrequenzschaltung ferner mit der Strommanagementschaltung verbunden ist.

5. Datenendgerät nach einem der Ansprüche 1 bis 4, wobei der erste Prozessor (101) ferner ausgelegt ist zum: nachdem der Schnittstellenisolator (103) vom getrennten Status in den verbundenen Status umgeschaltet hat, Empfangen, unter Verwendung der ersten Digitalaudioverbindungsvorrichtung (106) und der ersten Digitalaudioschaltung (102), von Sprachdaten, die durch den Computer übertragen wurden, Verarbeiten der Sprachdaten, um ein Basisbandsignal zu erhalten, und Senden des Basisbandsignals an die Hochfrequenzschaltung, und die Hochfrequenzschaltung ausgelegt ist zum Modulieren des Basisbandsignals auf ein Hochfrequenzsignal und zum Senden des Hochfrequenzsignals an das drahtlose Netzwerk; der erste Prozessor (101) ferner ausgelegt ist zum: Empfangen, unter Verwendung der ersten USB-Verbindungsvorrichtung (107) und der ersten USB-Schaltung (104), von Dienstdaten, die vom Computer gesendet wurden, Verarbeiten der Dienstdaten, um ein Basisbandsignal zu erhalten, und Senden des Basisbandsignals an die Hochfrequenzschaltung, und die Hochfrequenzschaltung ferner ausgelegt ist zum Modulieren des Basisbandsignals auf ein Hochfrequenzsignal und zum Senden des Hochfrequenzsignals an das drahtlose Netzwerk;
die Hochfrequenzschaltung ferner ausgelegt ist zum: Empfangen eines Hochfrequenzsignals, das vom drahtlosen Netzwerk gesendet wurde, Modulieren des Hochfrequenzsignals auf ein Basisbandsignal und Senden des Basisbandsignals an den ersten Prozessor (101); und der erste Prozessor (101) ferner ausgelegt ist zum: Verarbeiten des Basisbandsignals, um Sprachdaten oder Dienstdaten zu erhalten, Senden der Sprachdaten an den Computer unter Verwendung der ersten Digitalaudioschaltung (102) und der ersten Digitalaudioverbindungsvorrichtung (106) oder Senden der Dienstdaten an den Computer unter Verwendung der ersten USB-Schaltung (104) und der ersten USB-Verbindungsvorrichtung (107); und
der erste Prozessor (101) ferner ausgelegt ist zum Empfangen, durch Verwendung der ersten USB-Verbindungsvorrichtung (107) und der ersten USB-Schaltung (104), eines Systemsteuerungsbefehls, der vom Computer gesendet wurde, oder ausgelegt ist zum Senden eines Systemsteuerungsbefehls an den Computer unter Verwendung der ersten USB-Verbindungsvorrichtung (107) und der ersten USB-Schaltung (104).

6. Datenübertragungssystem, das Folgendes umfasst: ein Datenendgerät (301) und einen Computer (302), wobei
das Datenendgerät (301) einen ersten Prozessor (101), eine erste Digitalaudioschaltung (102), einen Schnittstellenisolator (103), eine erste Universal Serial Bus- bzw. USB-Schaltung (104) und eine erste Verbindungsvorrichtung (105) umfasst, wobei die erste Verbindungsvorrichtung (105) eine erste Digitalaudioverbindungsvorrichtung (106) und eine erste USB-Verbindungsvorrichtung (107) umfasst und die erste USB-Schaltung (104) ein "Hot-Swapping"-Merkmal aufweist;
der erste Prozessor (101) mit der ersten Digitalaudioschaltung (102) verbunden ist, der Prozessor (101) ferner mit der ersten USB-Schaltung (104) verbunden ist, wobei die erste Digitalaudioschaltung (102) mit dem Schnittstellenisolator (103) verbunden ist, der Schnittstellenisolator (103) mit der ersten Digitalaudioverbindungsvorrichtung (106) verbunden ist und die erste USB-Schaltung (104) mit der ersten USB-Verbindungsvorrichtung (107) verbunden ist; der Computer (302) einen zweiten Prozessor (303), eine zweite Digitalaudioschaltung (304), eine zweite USB-Schaltung (305), eine zweite Verbindungsvorrichtung (306) umfasst, wobei die zweite Verbindungsvorrichtung (306) eine zweite Digitalaudioverbindungsvorrichtung (307) und eine zweite USB-Verbindungsvorrichtung (308) umfasst und die zweite USB-Schaltung (305) ein "Hot-Swapping"-Merkmal aufweist;
der zweite Prozessor (303) mit der zweiten Digitalaudioschaltung (304) verbunden ist, der zweite Prozessor (303) ferner mit der zweiten USB-Schaltung (305) verbunden ist, die zweite Digitalaudioschaltung (304) mit der zweiten Digitalaudioverbindungsvorrichtung (307) verbunden ist und die zweite USB-Schaltung (305) mit der zweiten USB-Verbindungsvorrichtung (308) verbunden ist; die erste Verbindungsvorrichtung (105) ausgelegt ist zum Verbinden mit der zweiten Verbindungsvorrichtung (306), so dass das Datenendgerät (301) mit dem Computer (302) verbunden wird, wobei die erste Digitalaudioverbindungsvorrichtung (106) ausgelegt ist zum Verbinden mit der zweiten Digitalaudioverbindungsvorrichtung (307) und die erste USB-Verbindungsvorrichtung (107) ausgelegt ist zum Verbinden mit der zweiten USB-Verbindungsvorrichtung (308);
nachdem das Datenendgerät (301) unter Verwendung der ersten Verbindungsvorrichtung (105) mit der zweiten Verbindungsvorrichtung (306) des Computers (302) verbunden wurde, ist ein Anfangsstatus des Schnittstellenisolators (103) ein getrennter Status und die erste USB-Schaltung (104) und die zweite USB-Schaltung (305) treten in einen Initialisierungsprozess ein; nachdem Initialisierung der ersten USB-Schaltung (104) und der zweiten USB-Schaltung (305) abgeschlossen wurde, verhandelt der erste Prozessor (101) mit dem zweiten Prozessor (303) unter Verwendung der ersten USB-Schaltung (104), der ersten USB-Verbindungsvorrichtung (107), der zweiten USB-Verbindungsvorrichtung (308) und der zweiten USB-Schaltung (305) und bestimmt einen ersten Konfigurationsparameter der ersten Digitalaudioschaltung (102) und einen zweiten Konfigurationsparameter der zweiten Digitalaudioschaltung (304); wobei der erste Prozessor (101) die erste Digitalaudioschaltung (102) gemäß dem ersten Konfigurationsparameter konfiguriert und der zweite Prozessor (303) die zweite Digitalaudioschaltung (304) gemäß dem zweiten Konfigurationsparameter konfiguriert; und
nachdem die Konfiguration der ersten Digitalaudioschaltung (102) und der zweiten Digitalaudioschaltung (304) abgeschlossen wurde, empfängt der Schnittstellenisolator (103) einen Verbindungsbefehl und schaltet vom getrennten Status in einen verbundenen Status gemäß dem Verbindungsbefehl um, so dass ein Kanal zwischen der ersten Digitalaudioschaltung (102), der ersten Digitalaudioverbindungsvorrichtung (106), der zweiten Digitalaudioverbindungsvorrichtung (307) und der zweiten Digitalaudioschaltung (304) verbunden ist, und Sprachdatenübertragung zwischen dem ersten Prozessor (101) und dem zweiten Prozessor (303) unter Verwendung der ersten Digitalaudioschaltung (102), der ersten Digitalaudioverbindungsvorrichtung (106), der zweiten Digitalaudioverbindungsvorrichtung (307) und der zweiten Digitalaudioschaltung (304) durchgeführt wird.

7. Datenübertragungssystem nach Anspruch 6, wobei die erste Verbindungsvorrichtung (105) auf swapbare Weise mit der zweiten Verbindungsvorrichtung (306) verbunden ist; und
der Schnittstellenisolator (103) vom verbundenen Status zum getrennten Status umschaltet, nachdem eine Verbindung zwischen der ersten Verbindungsvorrichtung (105) und der zweiten Verbindungsvorrichtung (306) getrennt wurde.

8. Datenübertragungssystem nach Anspruch 6 oder 7, wobei, dass der Schnittstellenisolator (103) einen Verbindungsbefehl empfängt, insbesondere Folgendes bedeutet: der Schnittstellenisolator (103) empfängt den Verbindungsbefehl von der ersten Digitalaudioschaltung (102); oder der Schnittstellenisolator (103) empfängt den Verbindungsbefehl vom ersten Prozessor (101).

9. Datenübertragungssystem nach einem der Ansprüche 6 bis 8, wobei das Datenendgerät (301) ferner eine Strommanagementschaltung umfasst und der Computer (302) ferner eine Stromschaltung umfasst;
die Strommanagementschaltung mit dem ersten Prozessor (101), der ersten Digitalaudioschaltung (102), dem Schnittstellenisolator (103) und der ersten USB-Schaltung (104) verbunden ist; und
die Strommanagementschaltung ferner verbunden ist mit der ersten USB-Verbindungsvorrichtung (107) und die Stromschaltung mit der zweiten USB-Verbindungsvorrichtung (308) verbunden ist, so dass die Strommanagementschaltung ausgelegt ist zum Abgreifen elektrischer Energie von der Stromschaltung und zum Zuführen elektrischer Energie für den ersten Prozessor (101), die erste Digitalaudioschaltung (102), den Schnittstellenisolator (103) und die erste USB-Schaltung (104), nachdem die erste USB-Verbindungsvorrichtung (107) mit der zweiten Verbindungsvorrichtung (306) verbunden wurde.

10. Datenübertragungssystem nach einem der Ansprüche 6 bis 9, wobei das Datenendgerät (301) ferner eine Hochfrequenzschaltung umfasst, die ausgelegt ist zum Senden eines Hochfrequenzsignals an ein drahtloses Netzwerk oder zum Empfangen eines Hochfrequenzsignals von einem drahtlosen Netzwerk, wobei die Hochfrequenzschaltung mit dem ersten Prozessor (101) verbunden ist und die Hochfrequenzschaltung mit der Strommanagementschaltung verbunden ist.

11. Datenübertragungssystem nach einem der Ansprüche 6 bis 10, wobei der erste Prozessor (101) ferner ausgelegt ist zum: nachdem der Schnittstellenisolator (103) vom getrennten Status in den verbundenen Status umgeschaltet hat, Empfangen, unter Verwendung der zweiten Digitalaudioschaltung (304), der zweiten Digitalaudioverbindungsvorrichtung (307), der ersten Digitalaudioverbindungsvorrichtung (106) und der ersten Digitalaudioschaltung (102), von Sprachdaten, die durch den zweiten Prozessor (303) übertragen wurden, Verarbeiten der Sprachdaten, um ein Basisbandsignal zu erhalten, und Senden des Basisbandsignals an die Hochfrequenzschaltung, und die Hochfrequenzschaltung ausgelegt ist zum Modulieren des Basisbandsignals auf ein Hochfrequenzsignal und zum Senden des Hochfrequenzsignals an das drahtlose Netzwerk; und der erste Prozessor (101) ferner ausgelegt ist zum: Empfangen, unter Verwendung der zweiten USB-Verbindungsvorrichtung (308), der zweiten USB-Schaltung (305), der ersten USB-Verbindungsvorrichtung (107) und der ersten USB-Schaltung (104), von Dienstdaten, die vom zweiten Prozessor (303) gesendet wurden, Verarbeiten der Dienstdaten, um ein Basisbandsignal zu erhalten, und Senden des Basisbandsignals an die Hochfrequenzschaltung, und die Hochfrequenzschaltung ferner ausgelegt ist zum Modulieren des Basisbandsignals auf ein Hochfrequenzsignal und zum Senden des Hochfrequenzsignals an das drahtlose Netzwerk;
die Hochfrequenzschaltung ferner ausgelegt ist zum: Empfangen eines Hochfrequenzsignals, das vom drahtlosen Netzwerk gesendet wurde, Modulieren des Hochfrequenzsignals auf ein Basisbandsignal und Senden des Basisbandsignals an den ersten Prozessor (101); und der erste Prozessor (101) ferner ausgelegt ist zum: Verarbeiten des Basisbandsignals, um Sprachdaten oder Dienstdaten zu erhalten, Senden der Sprachdaten an den zweiten Prozessor (303) unter Verwendung der ersten Digitalaudioschaltung (102), der ersten Digitalaudioverbindungsvorrichtung (106), der zweiten Digitalaudioverbindungsvorrichtung (307) und der zweiten Digitalaudioschaltung (304) oder Senden der Dienstdaten an den zweiten Prozessor (303) unter Verwendung der ersten USB-Schaltung (104), der ersten USB-Verbindungsvorrichtung (107), der zweiten USB-Verbindungsvorrichtung (308) und der zweiten USB-Schaltung (305); und
der erste Prozessor (101) ferner ausgelegt ist zum Empfangen, unter Verwendung der zweiten USB-Verbindungsvorrichtung (308), der zweiten USB-Schaltung (305), der ersten USB-Verbindungsvorrichtung (107) und der ersten USB-Schaltung (104), eines Systemsteuerungsbefehls, der vom zweiten Prozessor (303) gesendet wurde, oder ausgelegt ist zum Senden eines Systemsteuerungsbefehls an den zweiten Prozessor (303) unter Verwendung der ersten USB-Schaltung (104), der ersten USB-Verbindungsvorrichtung (107), der zweiten USB-Verbindungsvorrichtung (308) und der zweiten USB-Schaltung (305).

12. "Hot-Swapping"-Steuerungsverfahren, wobei das "Hot-Swapping"-Steuerungsverfahren auf ein Datenendgerät angewandt wird und das Datenendgerät eine erste Schnittstelle umfasst, wobei die erste Schnittstelle eine erste Digitalaudioschnittstelle und eine erste USB-Schnittstelle umfasst, und die erste USB-Schnittstelle ein "Hot-Swapping"-Merkmal aufweist; und
das "Hot-Swapping"-Steuerungsverfahren die folgenden Schritte umfasst:
nachdem das Datenendgerät unter Verwendung der ersten Schnittstelle mit einem Computer verbunden wurde, Initialisieren (601) der ersten USB-Schnittstelle, wobei ein Anfangsstatus eines Kanals zwischen der ersten Digitalaudioschnittstelle und dem Computer ein getrennter Status ist;
nachdem Initialisierung der ersten USB-Schnittstelle abgeschlossen wurde, Verhandeln (602), durch das Datenendgerät, mit dem Computer unter Verwendung der ersten USB-Schnittstelle und Bestimmen eines ersten Konfigurationsparameters der ersten Digitalaudioschnittstelle;
Konfigurieren (603), durch das Datenendgerät, der ersten Digitalaudioschnittstelle gemäß dem ersten Konfigurationsparameter; und
Verbinden (604) des Kanals zwischen der ersten Digitalaudioschnittstelle und dem Computer, so dass Sprachdatenübertragung unter Verwendung der ersten Digitalaudioschnittstelle zwischen dem Datenendgerät und dem Computer durchgeführt wird.

13. Verfahren nach Anspruch 12, wobei das Verfahren, nach dem Verbinden des Kanals zwischen der ersten Digitalaudioschnittstelle und dem Computer, ferner die folgenden Schritte umfasst:
Empfangen, durch das Datenendgerät unter Verwendung der ersten Digitalaudioschnittstelle, von Sprachdaten, die vom Computer übertragen wurden, oder Empfangen, unter Verwendung der ersten USB-Schnittstelle, von Dienstdaten, die vom Computer übertragen wurden; und
Verarbeiten, durch das Datenendgerät, der Sprachdaten oder der Dienstdaten, um ein Hochfrequenzsignal zu erhalten, und Senden des Hochfrequenzsignals an ein drahtloses Netzwerk.

14. Verfahren nach Anspruch 12 oder 13, wobei das Verfahren, nach dem Verbinden des Kanals zwischen der ersten Digitalaudioschnittstelle und dem Computer, ferner die folgenden Schritte umfasst:
Empfangen, durch das Datenendgerät, eines Hochfrequenzsignals, das vom drahtlosen Netzwerk gesendet wurde;
Verarbeiten, durch das Datenendgerät, des Hochfrequenzsignals, um Sprachdaten oder Dienstdaten zu erhalten; und
Übertragen, durch das Datenendgerät, der Sprachdaten an den Computer unter Verwendung der ersten Digitalaudioschnittstelle, oder Übertragen der Dienstdaten an den Computer unter Verwendung der ersten USB-Schnittstelle.

15. Verfahren nach einem der Ansprüche 12 bis 14, wobei das Verfahren ferner umfasst: Empfangen oder Senden, durch das Datenendgerät, eines Systemsteuerungsbefehls unter Verwendung der ersten USB-Schnittstelle.

## Revendications

1. Terminal de données, comprenant:
un premier processeur (101), un premier circuit audio numérique (102), un isolateur d'interface (103), un premier circuit de bus série universel, USB, (104) et un premier appareil de connexion (105), le premier appareil de connexion (105) comprenant un premier appareil de connexion audio numérique (106) et un premier appareil de connexion USB (107) et le premier circuit USB (104) étant pourvu d'une fonctionnalité d'échange à chaud ;
le premier processeur (101) est connecté au premier circuit audio numérique (102), le premier processeur (101) est connecté en outre au premier circuit USB (104), le premier circuit audio numérique (102) est connecté à l'isolateur d'interface (103), l'isolateur d'interface (103) est connecté au premier appareil de connexion audio numérique (106) et le premier circuit USB (104) est connecté au premier appareil de connexion USB (107) ;
suite à la connexion du terminal de données à un ordinateur au moyen du premier appareil de connexion (105), un statut initial de l'isolateur d'interface (103) est un état déconnecté et le premier circuit USB (104) s'engage dans un processus d'initialisation ; le premier processeur (101) est configuré pour : à l'issue de l'initialisation du premier circuit USB (104), négocier avec l'ordinateur au moyen du premier circuit USB (103) et du premier appareil de connexion USB (107), déterminer un premier paramètre de configuration du premier circuit audio numérique (102) et configurer le premier circuit audio numérique (102) selon le premier paramètre de configuration ; et
à l'issue de la configuration sur le premier circuit audio numérique (102), l'isolateur d'interface (103) reçoit un ordre de connexion et commute de l'état déconnecté sur un état connecté selon l'ordre de connexion, de façon à connecter un canal entre le premier circuit audio numérique (102) et le premier appareil de connexion audio numérique (106) et à réaliser une transmission de données vocales entre le premier processeur (101) et l'ordinateur au moyen du premier circuit audio numérique (102) et du premier appareil de connexion audio numérique (106).

2. Terminal de données selon la revendication 1, dans lequel l'isolateur d'interface (103) reçoit un ordre de connexion plus particulièrement de la manière suivante : l'isolateur d'interface (103) reçoit l'ordre de connexion depuis le premier circuit audio numérique (102) ; ou l'isolateur d'interface (103) reçoit l'ordre de connexion depuis le premier processeur (101).

3. Terminal de données selon la revendication 1 ou 2, lequel terminal de données comprend en outre un circuit de gestion de l'alimentation, et le circuit de gestion de l'alimentation étant connecté au premier processeur (101), au premier circuit audio numérique (102), au premier circuit USB (104) et à l'isolateur d'interface (103) ; le circuit de gestion de l'alimentation étant configuré pour fournir de l'énergie électrique au premier processeur (101), au premier circuit audio numérique (102), au premier circuit USB (104) et à l'isolateur d'interface (103) ; et le circuit de gestion de l'alimentation étant connecté en outre au premier appareil de connexion USB (107) du premier appareil de connexion (105) de façon à ce que le circuit de gestion de l'alimentation obtienne de l'énergie électrique de l'ordinateur suite à la connexion du premier appareil de connexion (105) à l'ordinateur.

4. Terminal de données selon l'une quelconque des revendications 1 à 3, lequel terminal de données comprend en outre un circuit radiofréquence configuré pour envoyer un signal radiofréquence à un réseau sans fil ou pour recevoir un signal radiofréquence depuis un réseau sans fil, le circuit radiofréquence étant connecté au premier processeur (101) et le circuit radiofréquence étant connecté en outre au circuit de gestion de l'alimentation.

5. Terminal de données selon l'une quelconque des revendications 1 à 4, dans lequel le premier processeur (101) est configuré en outre pour : suite à la commutation de l'isolateur d'interface (103) de l'état déconnecté sur l'état connecté, recevoir, au moyen du premier appareil de connexion audio numérique (106) et du premier circuit audio numérique (102), des données vocales transmises par l'ordinateur, traiter les données vocales afin d'obtenir un signal de bande de base et envoyer le signal de bande de base au circuit radiofréquence, et le circuit radiofréquence est configuré pour moduler le signal de bande de base en un signal radiofréquence et envoyer le signal radiofréquence au réseau sans fil ; le premier processeur (101) est configuré en outre pour : recevoir, au moyen du premier appareil de connexion USB (107) et du premier circuit USB (104), des données de service envoyées par l'ordinateur, traiter les données de service afin d'obtenir un signal de bande de base et envoyer le signal de bande de base au circuit radiofréquence, et le circuit radiofréquence est configuré en outre pour moduler le signal de bande de base en un signal radiofréquence et envoyer le signal radiofréquence au réseau sans fil ;
le circuit radiofréquence est configuré en outre pour : recevoir un signal radiofréquence envoyé par le réseau sans fil, moduler le signal radiofréquence en un signal de bande de base et envoyer le signal de bande de base au premier processeur (101) ; et le premier processeur (101) est configuré en outre pour : traiter le signal de bande de base afin d'obtenir des données vocales ou des données de service, envoyer les données vocales à l'ordinateur au moyen du premier circuit audio numérique (102) et du premier appareil de connexion audio numérique (106) ou envoyer les données de service à l'ordinateur au moyen du premier circuit USB (104) et du premier appareil de connexion USB (107) ; et
le premier processeur (101) est configuré en outre pour recevoir, au moyen du premier appareil de connexion USB (107) et du premier circuit USB (104), un ordre de commande système envoyé par l'ordinateur, ou est configuré pour envoyer un ordre de commande système à l'ordinateur au moyen du premier appareil de connexion USB (107) et du premier circuit USB (104).

6. Système de transmission de données, comprenant : un terminal de données (301) et un ordinateur (302), dans lequel :
le terminal de données (301) comprend un premier processeur (101), un premier circuit audio numérique (102), un isolateur d'interface (103), un premier circuit de bus série universel, USB, (104) et un premier appareil de connexion (105), le premier appareil de connexion (105) comprenant un premier appareil de connexion audio numérique (106) et un premier appareil de connexion USB (107) et le premier circuit USB (104) étant pourvu d'une fonctionnalité d'échange à chaud ;
le premier processeur (101) est connecté au premier circuit audio numérique (102), le premier processeur (101) est connecté en outre au premier circuit USB (104), le premier circuit audio numérique (102) est connecté à l'isolateur d'interface (103), l'isolateur d'interface (103) est connecté au premier appareil de connexion audio numérique (106) et le premier circuit USB (104) est connecté au premier appareil de connexion USB (107) ;
l'ordinateur (302) comprend un deuxième processeur (303), un deuxième circuit audio numérique (304), un deuxième circuit USB (305), un deuxième appareil de connexion (306), le deuxième appareil de connexion (306) comprenant un deuxième appareil de connexion audio numérique (307) et un deuxième appareil de connexion USB (308), et le deuxième circuit USB (305) étant pourvu d'une fonctionnalité d'échange à chaud ;
le deuxième processeur (303) est connecté au deuxième circuit audio numérique (304), le deuxième processeur (303) est connecté en outre au deuxième circuit USB (305), le deuxième circuit audio numérique (304) est connecté au deuxième appareil de connexion audio numérique (307) et le deuxième circuit USB (305) est connecté au deuxième appareil de connexion USB (308) ;
le premier appareil de connexion (105) est configuré pour se connecter au deuxième appareil de connexion (306), de façon à connecter le terminal de données (301) à l'ordinateur (302), le premier appareil de connexion audio numérique (106) étant configuré pour se connecter au deuxième appareil de connexion audio numérique (307) et le premier appareil de connexion USB (107) étant configuré pour se connecter au deuxième appareil de connexion USB (308) ;
suite à la connexion du terminal de données (301) au deuxième appareil de connexion (306) de l'ordinateur (302) au moyen du premier appareil de connexion (105), un statut initial de l'isolateur d'interface (103) est un état déconnecté et le premier circuit USB (104) et le deuxième circuit USB (305) s'engagent dans un processus d'initialisation ; à l'issue de l'initialisation du premier circuit USB (104) et du deuxième circuit USB (305), le premier processeur (101) négocie avec le deuxième processeur (303) au moyen du premier circuit USB (104), du premier appareil de connexion USB (107), du deuxième appareil de connexion USB (308) et du deuxième circuit USB (305) et détermine un premier paramètre de configuration du premier circuit audio numérique (102) et un deuxième paramètre de configuration du deuxième circuit audio numérique (304) ; le premier processeur (101) configure le premier circuit audio numérique (102) selon le premier paramètre de configuration et le deuxième processeur (303) configure le deuxième circuit audio numérique (304) selon le deuxième paramètre de configuration ; et
à l'issue de la configuration sur le premier circuit audio numérique (102) et le deuxième circuit audio numérique (304), l'isolateur d'interface (103) reçoit un ordre de connexion et commute de l'état déconnecté sur un état connecté selon l'ordre de connexion, de façon à connecter un canal parmi le premier circuit audio numérique (102), le premier appareil de connexion audio numérique (106), le deuxième appareil de connexion audio numérique (307) et le deuxième circuit audio numérique (304) et à réaliser une transmission de données vocales entre le premier processeur (101) et le deuxième processeur (303) au moyen du premier circuit audio numérique (102), du premier appareil de connexion audio numérique (106), du deuxième appareil de connexion audio numérique (307) et du deuxième circuit audio numérique (304).

7. Système de transmission de données selon la revendication 6, dans lequel le premier appareil de connexion (105) est connecté au deuxième appareil de connexion (306) de manière échangeable ; et
l'isolateur d'interface (103) commute de l'état connecté sur l'état déconnecté suite à la déconnexion d'une connexion entre le premier appareil de connexion (105) et le deuxième appareil de connexion (306).

8. Système de transmission de données selon la revendication 6 ou 7, dans lequel l'isolateur d'interface (103) reçoit un ordre de connexion plus particulièrement de la manière suivante : l'isolateur d'interface (103) reçoit l'ordre de connexion depuis le premier circuit audio numérique (102) ; ou l'isolateur d'interface (103) reçoit l'ordre de connexion depuis le premier processeur (101).

9. Système de transmission de données selon l'une quelconque des revendications 6 à 8, dans lequel le terminal de données (301) comprend en outre un circuit de gestion de l'alimentation, et l'ordinateur (302) comprend en outre un circuit d'alimentation ;
le circuit de gestion de l'alimentation est connecté au premier processeur (101), au premier circuit audio numérique (102), à l'isolateur d'interface (103) et au premier circuit USB (104) ; et
le circuit de gestion de l'alimentation est connecté en outre au premier appareil de connexion USB (107), et le circuit d'alimentation est connecté au deuxième appareil de connexion USB (308) de manière à ce que, suite à la connexion du premier appareil de connexion USB (107) et du deuxième appareil de connexion (306), le circuit de gestion de l'alimentation soit configuré pour obtenir de l'énergie électrique du circuit d'alimentation et fournir de l'énergie électrique au premier processeur (101), au premier circuit audio numérique (102), à l'isolateur d'interface (103) et au premier circuit USB (104).

10. Système de transmission de données selon l'une quelconque des revendications 6 à 9, dans lequel le terminal de données (301) comprend en outre un circuit radiofréquence configuré pour envoyer un signal radiofréquence à un réseau sans fil ou pour recevoir un signal radiofréquence depuis un réseau sans fil, le circuit radiofréquence étant connecté au premier processeur (101) et le circuit radiofréquence étant connecté au circuit de gestion de l'alimentation.

11. Système de transmission de données selon l'une quelconque des revendications 6 à 10, dans lequel
le premier processeur (101) est configuré en outre pour : suite à la commutation de l'isolateur d'interface (103) de l'état déconnecté sur l'état connecté, recevoir, au moyen du deuxième circuit audio numérique (304), du deuxième appareil de connexion audio numérique (307), du premier appareil de connexion audio numérique (106) et du premier circuit audio numérique (102), des données vocales transmises par le deuxième processeur (303), traiter les données vocales afin d'obtenir un signal de bande de base et envoyer le signal de bande de base au circuit radiofréquence, et le circuit radiofréquence est configuré pour moduler le signal de bande de base en un signal radiofréquence et envoyer le signal radiofréquence au réseau sans fil ; et le premier processeur (101) est configuré en outre pour : recevoir, au moyen du deuxième appareil de connexion USB (308), du deuxième circuit USB (305), du premier appareil de connexion USB (107) et du premier circuit USB (104), des données de service envoyées par le deuxième processeur (303), traiter les données de service afin d'obtenir un signal de bande de base et envoyer le signal de bande de base au circuit radiofréquence, et le circuit radiofréquence est configuré en outre pour moduler le signal de bande de base en un signal radiofréquence et envoyer le signal radiofréquence au réseau sans fil ;
le circuit radiofréquence est configuré en outre pour : recevoir un signal radiofréquence envoyé par le réseau sans fil, moduler le signal radiofréquence en un signal de bande de base et envoyer le signal de bande de base au premier processeur (101) ; et le premier processeur (101) est configuré en outre pour : traiter le signal de bande de base afin d'obtenir des données vocales ou des données de service, envoyer les données vocales au deuxième processeur (303) au moyen du premier circuit audio numérique (102), du premier appareil de connexion audio numérique (106), du deuxième appareil de connexion audio numérique (307) et du deuxième circuit audio numérique (304) ou envoyer les données de service au deuxième processeur (303) au moyen du premier circuit USB (104), du premier appareil de connexion USB (107), du deuxième appareil de connexion USB (308) et du deuxième circuit USB (305) ; et le premier processeur (101) est configuré en outre pour recevoir, au moyen du deuxième appareil de connexion USB (308), du deuxième circuit USB (305), du premier appareil de connexion USB (107) et du premier circuit USB (104), un ordre de commande système envoyé par le deuxième processeur (303), ou est configuré pour envoyer un ordre de commande système au deuxième processeur (303) au moyen du premier circuit USB (104), du premier appareil de connexion USB (107), du deuxième appareil de connexion USB (308) et du deuxième circuit USB (305).

12. Procédé de commande d'échange à chaud, lequel procédé de commande d'échange à chaud est appliqué à un terminal de données, et le terminal de données comprenant une première interface, la première interface comprenant une première interface audio numérique et une première interface USB et la première interface USB étant pourvue d'une fonctionnalité d'échange à chaud ; et
le procédé de commande d'échange à chaud comprenant les étapes suivantes :
suite à la connexion du terminal de données à un ordinateur au moyen de la première interface, initialisation (601) de la première interface USB, un statut initial d'un canal entre la première interface audio numérique et l'ordinateur étant un état déconnecté ; à l'issue de l'initialisation de la première interface USB, négociation (602), par le terminal de données, avec l'ordinateur au moyen de la première interface USB, et détermination d'un premier paramètre de configuration de la première interface audio numérique ;
configuration (603), par le terminal de données, de la première interface audio numérique selon le premier paramètre de configuration ; et
connexion (604) du canal entre la première interface audio numérique et l'ordinateur, de façon à réaliser une transmission de données vocales entre le terminal de données et l'ordinateur au moyen de la première interface audio numérique.

13. Procédé selon la revendication 12, comprenant en outre, suite à la connexion du canal entre la première interface audio numérique et l'ordinateur, les étapes suivantes :
réception, par le terminal de données au moyen de la première interface audio numérique, de données vocales transmises par l'ordinateur, ou réception, au moyen de la première interface USB, de données de service transmises par l'ordinateur ; et
traitement, par le terminal de données, des données vocales ou des données de service afin d'obtenir un signal radiofréquence, et envoi du signal radiofréquence à un réseau sans fil.

14. Procédé selon la revendication 12 ou 13, comprenant en outre, suite à la connexion du canal entre la première interface audio numérique et l'ordinateur, les étapes suivantes :
réception, par le terminal de données, d'un signal radiofréquence envoyé par le réseau sans fil ;
traitement, par le terminal de données, du signal radiofréquence afin d'obtenir des données vocales ou des données de service ; et
transmission, par le terminal de données, des données vocales à l'ordinateur au moyen de la première interface audio numérique, ou transmission des données de service à l'ordinateur au moyen de la première interface USB.

15. Procédé selon l'une quelconque des revendications 12 à 14, lequel procédé comprend en outre l'étape suivante :
réception ou envoi, par le terminal de données, d'un ordre de commande système au moyen de la première interface USB.
